Europäisches Patentamt

European Patent Office

Office européen des brevets

(19)

(11) **EP 0 850 818 B1**

(12) **FASCICULE DE BREVET EUROPEEN**

(45) Date de publication et mention
de la délivrance du brevet:
**05.03.2003 Bulletin 2003/10**

(51) Int Cl.⁷: **B62D 5/06**

(21) Numéro de dépôt: **97403171.8**

(22) Date de dépôt: **29.12.1997**

(54) **Direction assistée electro-hydraulique pour véhicule automobile**

Elektro-hydraulische Servolenkung für ein Kraftfahrzeug

Electro-hydraulic power steering for a motor vehicle

(84) Etats contractants désignés:
**DE ES FR GB IT**

(30) Priorité: **31.12.1996 FR 9616285**

(43) Date de publication de la demande:
**01.07.1998 Bulletin 1998/27**

(73) Titulaire: **VALEO ELECTRONIQUE**
**94000 Creteil (FR)**

(72) Inventeur: **Permuy, Alfred**
**92500 Rueil-Malmaison (FR)**

(74) Mandataire: **Le Forestier, Eric**
**Cabinet Régimbeau**
**20, rue de Chazelles**
**75847 Paris cedex 17 (FR)**

(56) Documents cités:
**EP-A- 0 053 297**      **DE-C- 4 418 118**

## Description

La présente invention est relative aux directions assistées de véhicules automobiles telles que définies dans le préambule de la revendication 1 et connues par exemple du document DE4418118C.

Plus particulièrement, l'invention concerne un procédé pour la commande d'un moteur électrique d'entraînement de pompe hydraulique de direction assistée de véhicule automobile.

Elle concerne également une direction assistée comportant une pompe hydraulique, un moteur électrique pour l'entraînement de cette pompe, ainsi qu'une unité de gestion pour la commande du moteur électrique.

On connaît depuis longtemps des directions assistées de type hydraulique, selon lesquelles une pompe hydraulique est entraînée par une courroie sur l'arbre du moteur thermique du véhicule.

Toutefois, ce type de direction assistée présente de nombreux inconvénients.

On constate dans la pratique de nombreuses défaillances dues à l'usure des courroies

En outre, un tel dispositif impose un encombrement axial important au niveau de l'arbre du moteur thermique.

Egalement, il impose de placer la pompe hydraulique dans un milieu où elle est susceptible de subir de fortes contraintes thermiques et vibratoires.

On connaît par ailleurs des directions assistées de type électrique dans lesquelles un moteur électrique engrène sur la colonne de direction.

Toutefois, elles nécessitent pour la commande du moteur électrique une électronique complexe.

En outre, de tels dispositifs ne présentent pas une fiabilité satisfaisante : il arrive qu'un blocage du rotor du moteur électrique bloque également la colonne de direction du véhicule.

Pour pallier ces inconvénients, il a déjà été proposé des directions assistées hydrauliques dont la pompe est entraînée par un moteur électrique.

Toutefois, les directions assistées de ce type connues à ce jour utilisent des moteurs électriques surdimensionnés et imposent pour certaines d'entre elles une alimentation en permanence du moteur électrique.

Egalement encore, de tels dispositifs présentent une consommation énergétique particulièrement élevée (500 à 1,5 kW).

Il s'ensuit un problème d'évacuation des pertes joules dans le moteur.

Pour résoudre ce problème, il a déjà été proposé de commander la rotation du moteur électrique en fonction de l'effort demandé sur la colonne de direction. On pourra à cet égard se référer à la demande de brevet EP A 0 741 068.

Toutefois, une telle solution impose d'intégrer sur l'arbre de la colonne de direction un capteur de couple (telle qu'une barre de torsion) ou de vitesse de rotation.

Un but de l'invention est de proposer une direction assistée du type comportant une pompe hydraulique entraînée par un moteur électrique, dpnt la consommation statique du moteur est réduite et ce sans qu'il soit nécessaire d'intégrer des capteurs supplémentaires dans la colonne de direction.

A cet effet, l'invention propose une direction assistée pour véhicule automobile comportant une pompe hydraulique, un moteur électrique pour l'entraînement de cette pompe, ainsi qu'une unité de gestion pour la commande du moteur électrique, l'unité de gestion comportant des moyens pour commander la tension d'alimentation du moteur électrique de façon que ladite tension soit croissante jusqu'à une valeur maximale lorsque l'impédance de charge dudit moteur décroît à partir de sa valeur en l'absence de couple sur le volant, caractérisé en ce que lesdits moyens commandent la tension d'alimentation du moteur électrique en fonction de l'intensité du courant dudit moteur et en ce que lesdits moyens comprennent une boucle de réaction sur l'intensité du courant du moteur, qui génère une tension d'alimentation $U_M$ telle que

$$U_M = U_0 + H\, I_M,$$

où $U_0$ est la tension à vide, $I_M$ étant l'intensité du courant d'alimentation du moteur, H étant un filtre qui correspond à une fonction de transfert H(p) telle que

$$H(p) \;=\; K\left(\frac{p\tau_1 + 1}{p\tau_2 + 1}\right)$$

où K, $\tau 1$ et $\tau 2$ sont des paramètres choisis en fonction de la valeur de l'impédance de charge en l'absence de couple sur le volant.

On notera en particulier qu'une telle boucle de commande présente l'avantage de temps de réponses courts. Une telle direction assistée est avantageusement complétée par les différentes caractéristiques suivantes prises seules ou selon toutes leurs combinaisons techniquement possibles :

- la tension maximale de la tension d'alimentation correspond à la tension de la batterie et lorsque l'impédance de charge est au voisinage de sa valeur en l'absence de couple sur le volant, ladite tension d'alimentation est maintenue à des valeurs de l'ordre de 3 et 8Volts ;
- ladite direction assistée comporte des moyens de limitation de l'intensité du courant du moteur ;
- les moyens de limitation de l'intensité du courant du moteur comportent des moyens de temporisation permettant un dépassement temporaire pendant une durée prédéterminée de l'intensité du courant par rapport à l'intensité de limitation ;

- ladite direction assistée comporte des moyens pour faire varier au moins un paramètre de la loi de commande de la tension d'alimentation du moteur électrique en fonction de la vitesse du véhicule ;

- la direction assistée comporte des moyens pour évaluer périodiquement des paramètres du système électromécanique.

D'autres caractéristiques et avantages de l'invention ressortiront encore de la description qui suit. Cette description est purement illustrative et non limitative. Elle doit être lue en regard des dessins annexés sur lesquels :

- la figure 1 est une représentation schématique d'une direction assistée de véhicule automobile ;
- la figure 2 illustre la caractéristique de commande du moteur électrique du dispositif de la figure 1;
- la figure 3 est un schéma d'un montage du dispositif de la figure 1 ;
- la figure 4 est un schéma illustrant une modélisation électrique de l'entraînement d'une pompe hydraulique par un moteur électrique ;
- la figure 5 est un schéma du module de commande du montage de la figure 3 ;
- la figure 6a est un schéma d'un filtre possible pour le montage de la figure 5 ;
- la figure 6b illustre un autre mode de réalisation possible pour le filtre du montage de la figure 5.

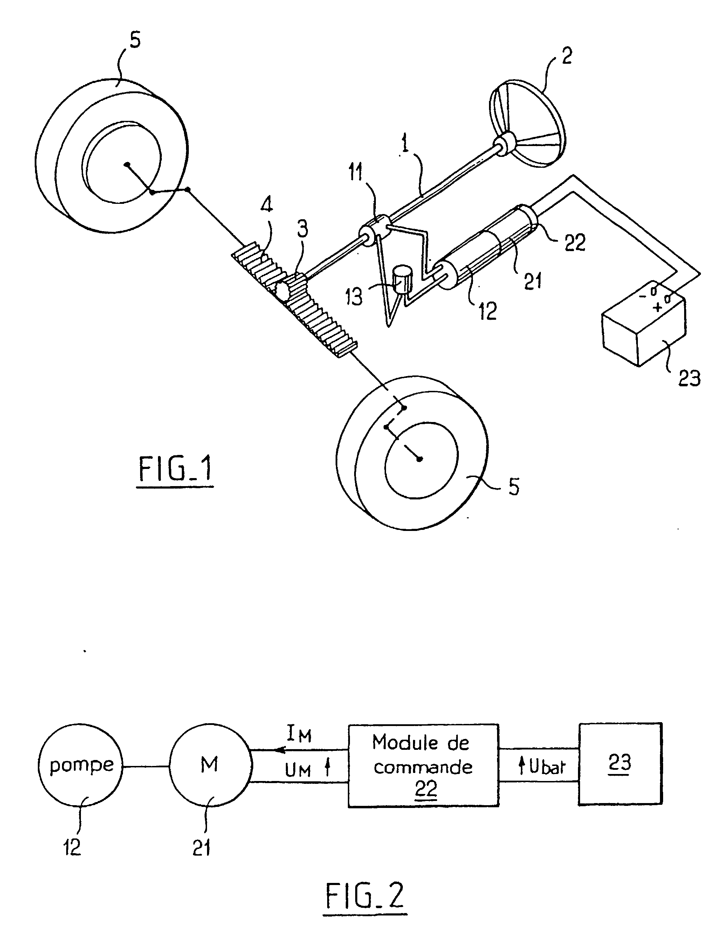

Sur la figure 1, on a référencé par 1 la colonne de direction d'un véhicule et par 2 son volant.

Cette colonne de direction 1 porte une valve rotative 11 qui, pour aider à la rotation de l'axe de ladite colonne, dirige un fluide sous pression - reçu d'une pompe 12 - dans un premier ou un deuxième sous-circuit selon le sens du braquage.

Le fluide sous pression produit ainsi une assistance à la rotation dans un sens ou dans l'autre.

A son extrémité opposée au volant 2, l'axe de la colonne de direction 1 se termine par un engrenage 3 qui coopère avec une crémaillère 4 disposée sur l'essieu avant du véhicule.

Le déplacement de la crémaillère 4 sous l'effet du fluide sous pression dans le premier ou le deuxième sous-circuit fait tourner, par l'intermédiaire d'articulations qui ne seront pas ici décrites, les roues avant 5 du véhicule.

On a également représenté sur la figure 1 le réservoir 13 du circuit hydraulique principal.

Ainsi que l'illustre la figure 2, la pompe hydraulique 12 est entraînée par un moteur électrique 21.

La tension d'alimentation du moteur électrique 21 est commandée par un module 22, qui est lui-même alimenté par la batterie 23 du véhicule.

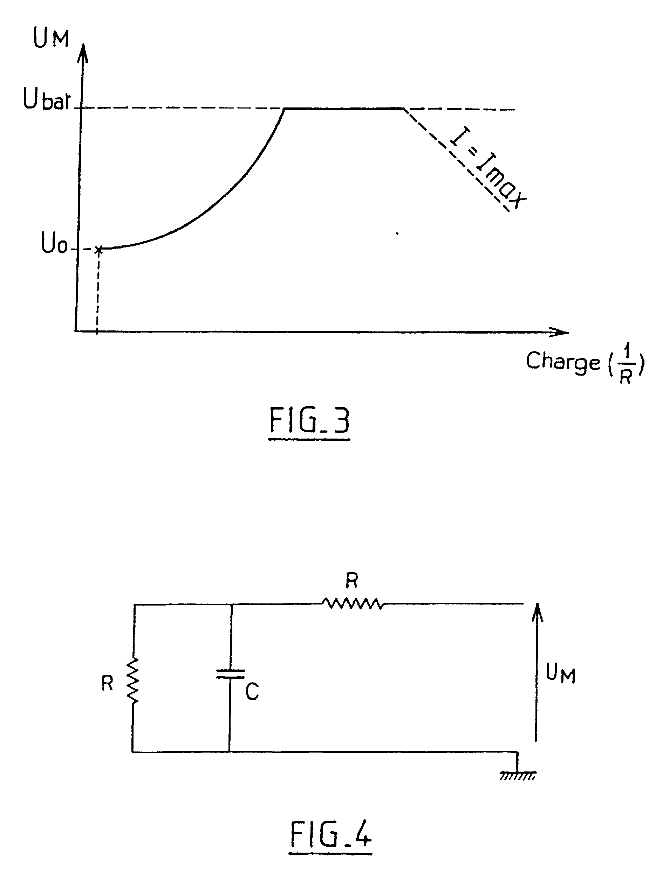

Ce module 22 impose à la tension d'alimentation une caractéristique en fonction de la charge 1/R du moteur 21, similaire à celle illustrée sur le graphe de la figure 3, sur lequel on a porté en abscisse l'inverse de l'impédance de charge du moteur 21 et en ordonnée la tension d'alimentation imposée au moteur.

Tant que cette charge 1/R est faible, la tension d'alimentation du moteur est maintenue à une valeur à vide $U_0$ de l'ordre de 4 à 8 Volts.

Lorsque la charge 1/R croît, la tension $U_M$ est augmentée jusqu'à correspondre à la valeur de la tension de la batterie.

Ainsi, avec une caractéristique de charge du type de celle illustrée sur la figure 3, tant que le conducteur ne fait pas tourner le volant 2 du véhicule, la puissance fournie au moteur électrique est réduite. Ce n'est que lorsque le conducteur exerce un couple de rotation sur le volant que la tension d'alimentation du moteur 21 croît jusqu'à une valeur maximale de l'ordre de la tension de la batterie (12 Volts).

On sait en effet, ainsi qu'on l'a illustré sur la figure 4, que la charge du moteur électrique peut être modélisée comme une résistance variable R. Lorsque le conducteur fait tourner le volant 2 du véhicule, cette résistance diminue de sorte que le courant d'alimentation augmente. Sur la figure 4, on a porté la résistance r des enroulements du moteurs, ainsi qu'une capacité C montée en parallèle sur l'impédance R. Cette capacité C introduit une constante de temps qui modélise l'inertie du système. L'inductance des enroulements du moteur est supposée négligeable.

Par conséquent, connaissant $U_M$ et l'intensité $I_M$ du courant du moteur, il est possible de déterminer la charge 1/R du moteur 21.

Pour réaliser une loi de commande du type de celle illustrée sur la figure 3, on utilise dans le module de commande 22 un filtre dont la fonction de transfert correspond à :

$$H(p) \;=\; K \left( \frac{p\tau_1 + 1}{p\tau_2 + 1} \right)$$

où K, $\tau$1 et $\tau$2 sont tels que le système est stable lorsque le couple volant est nul.

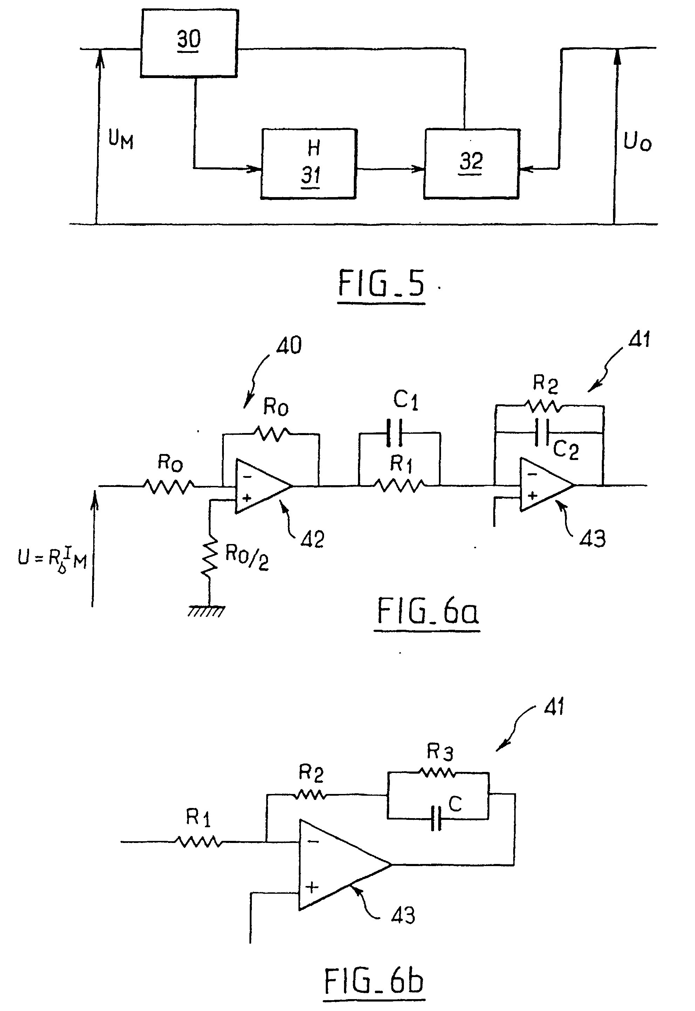

Pour réaliser une telle commande, le module 22 comporte par exemple un montage tel qu'illustré sur la figure 5, sur laquelle la référence 30 désigne des moyens pour la mesure du courant $I_M$ (résistance de shunt par exemple), la référence 31 désigne des moyens qui réalisent le filtre H et la référence 32 désigne des moyens sommateurs qui avec le filtre H génèrent en sortie la tension $U_M = U_0 + H\,I_M$.

Les moyens 31 correspondent par exemple à un montage tel qu'illustré sur la figure 6a.

Ce montage comporte un étage amplificateur inverseur 40 (de gain -1), ainsi qu'un étage 41 qui réalise la fonction de transfert H(p).

L'amplificateur inverseur 40 reçoit en entrée une tension U proportionnelle à l'intensité $I_M$ ($U = Rs.I_M$, où Rs est la résistance de shunt des moyens 30).

Cette tension U est injectée par l'intermédiaire d'une résistance $R_0$ sur l'entrée inverseuse d'un amplificateur opérationnel 42 dont l'entrée non inverseuse est reliée à la masse par une résistance $R_0/2$ et dont la sortie est bouclée sur son entrée inverseuse de l'amplificateur opérationnel 42 par une résistance $R_0$.

L'étage 41 comporte quant à lui un amplificateur opérationnel 43 dont l'entrée inverseuse est reliée par une résistance $R_1$ montée en parallèle avec un condensateur $C_1$ à la sortie de l'amplificateur opérationnel 42 et dont la sortie est bouclée par une résistance $R_2$ montée en parallèle avec un condensateur $C_2$ sur l'entrée inverseuse dudit amplificateur 43. Sur son entrée non inverseuse est injectée une tension correspondant à $U_0/(1 + R_2/R_1)$.

Avec un tel montage, le paramètre K est égal à $R_2/R_1$ tandis que les paramètres $\phi_1$ et $\phi_2$ sont respectivement égaux à $R_1C_1$ et $R_2C_2$.

En variante, l'étage 41 peut être remplacé par le montage qui est illustré sur la figure 6b.

Sur ce montage, la sortie de l'amplificateur 42 est injectée par l'intermédiaire d'une résistance $R_1$ sur l'entrée inverseuse d'un amplificateur opérationnel 43.

La sortie de cet amplificateur 43 est bouclée sur cette entrée inverseuse par l'intermédiaire d'un montage qui comporte une résistance $R_2$ en série avec une résistance $R_3$ montée en parallèle avec un condensateur C. Avec un tel montage, le paramètre K est égal à $(R_2 + R_3)/1$, tandis que les paramètres $\phi_1$ et $\phi_2$ sont respectivement égaux à $[R_2.R_3 /(R_1 + R_3)].C$ et $R_3C$.

Cette variante est particulièrement avantageuse, puisqu'elle permet de déterminer les composants $R_2$, $R_3$ et C de l'étage 41 directement à partir des valeurs déterminées expérimentalement pour r, R et C (figure 4).

En variante encore, certains des paramètres qui interviennent dans la caractéristique de charge (par exemple 0, $R_1$, $R_2$, $R_3$ ou C), sont rendus dépendants d'une mesure de la vitesse du véhicule, de sorte que l'assistance de direction est rendue variable en fonction de la vitesse de celui-ci.

Avantageusement encore, ainsi qu'illustré sur la figure 3, le module 22 intègre des moyens pour la limitation de l'intensité du courant du moteur 21 à une valeur Imax.

Ces moyens, dont la réalisation est à la portée de l'Homme du Métier, commandent à la tension d'alimentation du moteur de manière à limiter l'intensité du courant du moteur à la valeur Imax.

Cette limitation de courant permet de maintenir à une valeur raisonnable l'échauffement du moteur et des éléments électriques et électroniques du module 22.

Selon un mode de mise en oeuvre avantageux, la limitation de courant est temporisée de manière à permettre un dépassement temporaire (inférieur à 0,2 s) par rapport à sa valeur limite, ce qui autorise un accroissement rapide du régime moteur.

Avantageusement, le dispositif comporte des moyens pour évaluer périodiquement des paramètres du système électromécanique. De tels moyens permettent de s'affranchir de dérives thermiques et d'usures.

## Revendications

1. Direction assistée pour véhicule automobile comportant une pompe hydraulique (12), un moteur électrique (21) pour l'entraînement de cette pompe, ainsi qu'une unité de gestion pour la commande du moteur électrique, l'unité de gestion comportant des moyens pour commander la tension d'alimentation du moteur électrique (21) de façon que ladite tension soit croissante jusqu'à une valeur maximale lorsque l'impédance de charge dudit moteur décroît à partir de sa valeur en l'absence de couple sur le volant **caractérisé en ce que** lesdits moyens commandent la tension d'alimentation du moteur électrique (21) en fonction de l'intensité du courant dudit moteur et **en ce que** lesdits moyens comprennent une boucle de réaction sur l'intensité du courant du moteur, qui génère une tension d'alimentation $U_M$ telle que

$$U_M = U_0 + H I_M,$$

où $U_0$ est la tension à vide, $I_M$ étant l'intensité du courant d'alimentation du moteur, H étant un filtre qui correspond à une fonction de transfert H(p) telle que

$$H(p) = K \left( \frac{p\tau_1 + 1}{p\tau_2 + 1} \right)$$

où K,$\tau$1 et $\tau$2 sont des paramètres choisis en fonction de la valeur de l'impédance de charge en l'absence de couple sur le volant.

2. Direction assistée selon la revendication 1, **caractérisée en ce que** la tension maximale de la tension d'alimentation correspond à la tension de la batterie et **en ce que** lorsque l'impédance de charge est au voisinage de sa valeur en l'absence de couple sur le volant, ladite tension d'alimentation est maintenue à des valeurs de l'ordre de 3 et 8Volts.

3. Direction assistée selon l'une des revendications précédentes, **caractérisée en ce qu'**elle comporte des moyens de limitation de l'intensité du courant du moteur.

4. Direction assistée selon la revendication 3, **caractérisé en ce que** les moyens de limitation de l'intensité du courant du moteur comportent des moyens de temporisation permettant un dépassement temporaire pendant une durée prédéterminée de l'intensité du courant par rapport à l'intensité de limitation.

5. Direction assistée selon l'une des revendications précédentes, **caractérisé en ce qu'**elle comporte des moyens pour faire varier au moins un paramètre de la loi de commande de la tension d'alimentation du moteur électrique en fonction de la vitesse du véhicule.

6. Direction assistée selon l'une des revendications précédentes, **caractérisé en ce qu'**elle comporte des moyens pour évaluer périodiquement des paramètres du système électromécanique.

**Patentansprüche**

1. Servolenkung für Kraftfahrzeuge, mit einer Hydraulikpumpe (12), einem Elektromotor (21) zum Antrieb der Pumpe sowie einer Steuereinheit zur Steuerung des Elektromotors, wobei die Steuereinheit Mittel zum Steuern der Speisespannung des Elektromotors (21) derart umfasst, dass die Spannung bis zu einem Maximalwert ansteigt, wenn die Lastimpedanz des Motors ausgehend von ihrem Wert bei nicht vorhandenem Lenkmoment abnimmt, **dadurch gekennzeichnet, dass** diese Mittel die Speisespannung des Elektromotors (21) in Abhängigkeit von der Stärke des Motorstroms steuern, und dass diese Mittel einen Rückkopplungskreis hinsichtlich der Stärke des Motorstroms aufweisen, der eine Speisespannung $U_M$ der Art

$$U_M = U_0 + H \, I_M$$

erzeugt, wobei $U_0$ die Leerlaufspannung, $I_M$ die Stärke des Speisestroms des Motors und H ein Filter ist, der einer Übertragungsfunktion H(p) der Art

$$H(p) = \mathcal{K}\left(\frac{p\tau_1 + 1}{p\tau_2 + 1}\right)$$

entspricht, wobei K, $\tau_1$ und $\tau_2$ Parameter sind, die in Abhängigkeit vom Wert der Lastimpedanz bei nicht vorhandenem Lenkmoment gewählt sind.

2. Servolenkung nach Anspruch 1, **dadurch gekennzeichnet, dass** die Maximalspannung der Speisespannung der Spannung der Batterie entspricht, und dass die Speisespannung, wenn die Lastimpedanz in der Nähe ihres Wertes für ein nicht vorhandenes Lenkmoment liegt, auf Werten von 3 bis 8 Volt gehalten wird.

3. Servolenkung nach einem der vorhergehenden Ansprüche, **dadurch gekennzeichnet, dass** sie Mittel zur Begrenzung der Stärke des Motorstroms umfasst.

4. Servolenkung nach Anspruch 3, **dadurch gekennzeichnet, dass** die Mittel zur Begrenzung der Stärke des Motorstroms Verzögerungsmittel umfassen, die für eine vorgegebene Dauer ein vorübergehendes Überschreiten der Stromstärke in Bezug auf die Begrenzungsstärke erlauben.

5. Servolenkung nach einem der vorhergehenden Ansprüche, **dadurch gekennzeichnet, dass** sie Mittel umfasst, um wenigstens einen Parameter des Steuerungsgesetzes der Speisespannung des Elektromotors in Abhängigkeit von der Fahrzeuggeschwindigkeit zu verändern.

6. Servolenkung nach einem der vorhergehenden Ansprüche, **dadurch gekennzeichnet, dass** sie Mittel zum periodischen Bewerten der Parameter des elektromechanischen Systems umfasst.

**Claims**

1. Assisted steering for a motor vehicle comprising a hydraulic pump (12), an electric motor (21) for driving this pump and a management unit for controlling the electric motor, the management unit having means for controlling the supply voltage of the electric motor (21) so that the said voltage increases up to a maximum value when the load impedance of the said motor decreases from its value in the absence of torque on the steering wheel, **characterised in that** the said means control the supply voltage of the electric motor (21) according to the intensity of the current of the said motor and **in that** the said means comprise a feedback loop on the intensity of the motor current, which generates a supply voltage $U_M$ such that

$$U_M = U_0 + H \, I_M,$$

where $U_0$ is the off-load voltage, $I_M$ being the intensity of the motor supply current, H being a filter which corresponds to a transfer function H(p) such that

$$H(p) = K \left( \frac{p\tau_1 + 1}{p\tau_2 + 1} \right)$$

where K, $\tau$1 and $\tau$2 are parameters chosen according to the value of the load impedance in the absence of any torque on the steering wheel.

2. Assisted steering according to Claim 1, **characterised in that** the maximum voltage of the supply voltage corresponds to the voltage of the battery and **in that**, when the load impedance is close to its value in the absence of torque on the steering wheel, the said supply voltage is maintained at values of around 3 and 8 volts.

3. Assisted steering according to one of the preceding claims, **characterised in that** it has means of limiting the intensity of the motor current.

4. Assisted steering according to Claim 3, **characterised in that** the means of limiting the intensity of the motor current include timing means allowing a temporary exceeding, for a predetermined period, of the intensity of the current with respect to the limitation intensity.

5. Assisted steering according to one of the preceding claims, **characterised in that** it comprises means for varying at least one parameter of the control law for the supply voltage of the electric motor according to the speed of the vehicle.

6. Assisted steering according to one of the preceding claims, **characterised in that** it has means for periodically evaluating parameters of the electromagnetic system.

FIG_1

FIG_2

FIG_3

FIG_4

FIG.5

FIG.6a

FIG.6b